Europäisches Patentamt

(19) European Patent Office

Office européen des brevets

(11) Numéro de publication: **0 035 936**
**B1**

(12) **FASCICULE DE BREVET EUROPEEN**

(45) Date de publication du fascicule du brevet: **21.11.84**

(51) Int. Cl.³: **G 01 N 29/02**

(21) Numéro de dépôt: **81400331.5**

(22) Date de dépôt: **04.03.81**

(54) Procédé et dispositif pour contrôler le fonctionnement d'une colonne d'extraction liquide-liquide.

(30) Priorité: **12.03.80 FR 8005526**

(43) Date de publication de la demande:
**16.09.81 Bulletin 81/37**

(45) Mention de la délivrance du brevet:
**21.11.84 Bulletin 84/47**

(84) Etats contractants désignés:
**BE DE FR GB IT**

(56) Documents cités:
**US-A-3 359 787**
**US-A-3 648 513**
**US-A-4 135 387**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Jaouen, Adrien 31, rue du Monument F-94500 Champigny (FR)**
Inventeur: **Jorda, Alain 25, Résidence du Parc F-91300 Massy (FR)**
Inventeur: **Forster, Michel 20, rue Brahms F-26000 Valence (FR)**
Inventeur: **Rampin, Pierre 11, rue Honegger F-26000 Valence (FR)**

(74) Mandataire: **Mongrédien, André et al c/o BREVATOME 25, rue de Ponthieu F-75008 Paris (FR)**

Courier Press, Leamington Spa, England.

## Description

La présente invention a pour objet un procédé et un dispositif de contrôle du fonctionnement d'une colonne d'extraction liquide-liquide.

De façon plus précise, elle concerne un procédé qui permet de déterminer soit la fraction volumique de l'un ou des deux liquides présents dans la colonne d'extraction liquide-liquide, par exemple dans une colonne pulsée, soit le niveau de l'interphase dans le décanteur de la colonne.

On sait que les procédés d'extraction liquide-liquide présentent un grand intérêt pour séparer, par exemple, au moyen d'un solvant organique, certains éléments présents dans une solution aqueuse. Ces procédés d'extraction liquide-liquide sont généralement mis en oeuvre dans des colonnes où l'on fait circuler à contrecourant les deux phases liquides, la phase lourde ayant la densité la plus forte étant injectée en haut de la colonne et l'autre phase de densité plus faible ou phase légère étant injectée en bas de la colonne. Par mise en contact de ces deux phases, l'élément à séparer se partage entre chacune des phases suivant les lois de la thermodynamique chimique et en jouant sur l'affinité d'un élément pour l'une des phases, on peut arriver à extraire cet élément presque complètement et à le séparer des autres éléments.

Ces colonnes d'extraction comportent généralement un fût central garni de plateaux où s'opère l'échange des éléments entre les deux phases liquides et deux zones de désengagement situées respectivement à chacune des extrémités de la colonne. Dans le fût central, l'une des phases liquides est maintenue à l'état de dispersion dans l'autre phase liquide qui constitue la phase continue. Dans les zones de désengagement, on obtient une séparation entre les deux phases liquides; en particulier, l'une de ces zones de désengagement est utilisée comme décanteur pour assurer la coalescence de la phase dispersée. Lorsque la colonne fonctionne en phase légère continue, le décanteur se trouve à l'extrémité inférieure de la colonne; lorsqu'elle fonctionne en phase lourde continue, le décanteur est situé au contraire à l'extrémité supérieure de la colonne. Pour obtenir un fonctionnement satisfaisant des colonnes d'extraction, la pratique habituelle consiste à maintenir constant le niveau d'interphase, c'est-à-dire le niveau de séparation des deux phases liquides, dans le décanteur. Aussi, pour contrôler le fonctionnement d'une colonne d'extraction, il est nécessaire de mesurer fréquemment le niveau de l'interphase dans le décanteur.

Un autre moyen généralement utilisé pour suivre le fonctionnement d'une colonne d'extraction liquide-liquide est de déterminer le taux de rétention $\varepsilon$ de la phase dispersée, c'est-à-dire le pourcentage en volume de la phase dispersée contenue dans un volume v de la colonne. Ainsi, le taux de rétention $\varepsilon$ peut être représenté par la formule suivante:

$$\varepsilon = \frac{V_d}{V}$$

dans laquelle $V_d$ représente le volume de la phase dispersée contenue dans un volume V de la colonne.

Ce paramètre est extrêmement important car il conditionne le fonctionnement des colonnes. En effet, si le taux de rétention est faible, les gouttes de phase dispersées passeront facilement dans la colonne, mais le débit de matière extrait dans cette phase dispersée sera petit; si le taux de rétention est fort, l'efficacité sera plus grande, mais on risquera d'atteindre localement une coalescence trop importante des gouttes, ce qui peut conduire à une inversion de phases et à l'engorgement de la colonne.

Aussi, la zone correcte de fonctionnement se place entre ces deux situations limites. De ce fait, il est d'un grand intérêt de pouvoir connaître, à tout instant et en différents points de la colonne d'extraction, les valeurs du taux de rétention de la phase dispersée afin de contrôler le fonctionnement de cette colonne.

Jusqu'à présent, on a mesuré le taux de rétention de la phase dispersée, soit par des méthodes nécessitant le prélèvement d'un échantillon du mélange diphasique présent dans la colonne, soit par des méthodes conductimétriques.

Dans les méthodes nécessitant un prélèvement du mélange diphasique, on utilise une vanne électrique ou pneumatique pour prélever un échantillon du mélange, puis on laisse décanter ce mélange et l'on mesure les volumes respectifs des deux phases, ce qui permet de déterminer le taux de rétention. Cette méthode présente deux inconvénients: le prélèvement perturbe le fonctionnement de la colonne d'extraction, ce qui peut avoir des conséquences graves lorsque la colonne est à la limite de l'engorgement; la mesure ne peut s'effectuer qu'épisodiquement et la fréquence doit même être relativement faible si l'on veut éviter l'inconvénient précité.

Les méthodes de mesure par conductimétrie d'appliquent seulement au cas où une seule des phases est conductrice. Dans ce cas, on détermine la conductivité du mélange diphasique, ce qui permet d'évaluer le pourcentage volumique de la phase dispersée.

Cependant, cette méthode ne peut s'appliquer que lorsque la phase continue est conductrice; de plus, si la phase continue est trop conductrice, la dispersion d'une phase isolante dans la phase conductrice ne modifie que très peu la conductivité du mélange diphasique, à des taux de rétention voisins de ceux utilisés dans les colonnes d'extraction liquide-liquide. Ceci est par exemple le cas lorsque la phase conductrice est une solution d'acide nitrique 2 ou 3N.

Dans d'autres domaines que les colonnes d'extraction liquide-liquide, on a envisagé d'utiliser la technique des ultra-sons pour déterminer la composition d'un mélange diphasique à un seul constituant ou à deux constituants.

Ainsi, dans le brevet US—A—4 135 387 on contrôle la proportion des phases existant dans un fluide à un seul constituant tel qu'un mélange de vapeur et d'eau circulant dans un conduit, en soumettant à l'action d'un premier générateur d'ondes acoustiques pour l'homogénéiser, puis d'un second générateur d'ondes acoustiques dont les ondes sont détectées par un détecteur afin de mesurer le temps mis par ces ondes acoustiques pour traverser le conduit. On déduit ensuite de ce temps la vitesse des ondes acoustiques et la proportion des deux phases présentes dans le mélange.

Dans le procédé décrit dans le brevet américain US—A—3 359 787, on mesure le temps mis par un signal ultrasonore pour traverser une colonne d'un mélange d'eau et d'huile et on en déduit la teneur en eau de l'huile, après avoir étalonné le dispositif de mesure en effectuant différentes mesures sur des huiles ayant des teneurs déterminées en eau.

Cependant, ces techniques de mesures présentent l'inconvénient d'exiger un étalonnage préalable de l'appareil, ce qui présente certains inconvénients dans le cas d'une colonne d'extraction liquide-liquide où la composition des deux liquides varie entre l'entrée et la sortie de la colonne. Par ailleurs, ces mesures par ultra-sons ne sont pas adaptées à une colonne d'extraction puisqu'elles nécessitent soit l'emploi d'un premier générateur d'ultra-sons pour homogénéiser le mélange (US—A—4 135 387), soit le prélèvement d'une fraction du mélange (US—A—3 359 187).

La présente invention a précisément pour objet un procédé de contrôle du fonctionnement d'une colonne d'extraction liquide-liquide utilisant la technique de mesure par ultrasons qui permet d'éviter les inconvénients précités.

Selon l'invention, le procédé de contrôle du fonctionnement d'une colonne d'extraction liquide-liquide comportant un décanteur, colonne dans laquelle circulent à contre-courant des liquides immiscibles constitués respectivement par un liquide $L_1$ et un liquide $L_2$, le liquide $L_2$ ayant une densité plus faible que celle du liquide $L_1$, se caractérise en ce qu'il consiste à déterminer le temps $t$ mis par un signal ultrasonore pour se propager dans la colonne d'un point P à un point P' situé à une distance $d$ du point P, à déterminer directement dans la colonne la vitesse $v_1$ de propagation de ce signal ultrasonore dans le liquide $L_1$ et la vitesse $v_2$ de propagation de ce signal ultrasonore dans le liquide $L_2$ et à calculer à partir de ce temps $t$, de la distance $d$ et des vitesses $v_1$ et $v_2$ ainsi déterminées, soit la fraction volumique de l'un ou des deux liquides $L_1$ et $L_2$, soit le niveau de l'interphase entre les liquides $L_1$ et $L_2$ présents dans ledit décanteur.

Selon un premier mode de réalisation du procédé de l'invention, les points P et P' sont situés dans la partie centrale de la colonne et l'on calcule la fraction volumique $\varepsilon_1$ du liquide $L_1$ et/ou la fraction volumique $\varepsilon_2$ du liquide $L_2$ à partir des formules:

$$\varepsilon_1 = \frac{v_1}{d} \cdot \frac{v_2\, t - d}{v_2 - v_1} \quad \text{et}$$

$$\varepsilon_2 = \frac{v_2}{d} \cdot \frac{v_1\, t - d}{v_1 - v_2}$$

Selon le procédé de l'invention, on détermine ainsi le temps $t$ que met un signal ultrasonore pour parcourir la distance $d$, ce qui permet de calculer ensuite le taux de rétention ou la fraction volumique de l'une des phases présentes dans la colonne, puisque l'on connaît par ailleurs les vitesses respectives $v_1$ et $v_2$ de propagation de ce signal ultrasonore dans les liquides $L_1$ et $L_2$.

En effet, on sait que la vitesse de propagation d'un signal ultrasonore dépend des caractéristiques du milieu dans lequel il se propage. Pour un liquide, les principales caractéristiques sont les suivantes:

— viscosité,
— température,
— densite, etc.

Aussi, le temps que mettra le signal pour parcourir la distance $d$ dans le milieu diphasique constituée par les deux liquides $L_1$ et $L_2$ correspond à la somme des temps que met ce signal ultrasonore pour parcourir chacune des phases liquides $L_1$ et $L_2$ successivement rencontrées.

Aussi, lorsqu'on connaît la distance $d$ entre sonde émettrice et réceptrice, la vitesse $v_1$ du son dans le liquide $L_1$, la vitesse $v_2$ du son dans le liquide $L_2$, et le temps $t$ mis par le signal ultrasonore pour parcourir la distance $d$, on a les relations:

$$t = \frac{\varepsilon_1\, d}{v_1} + \frac{(1 - \varepsilon_1)\, d}{v_2} \quad \text{ou}$$

$$t = \frac{\varepsilon_2 d}{v_2} + \frac{(1 - \varepsilon_2)\, d}{v_1}$$

dans lesquelles $\varepsilon_1$ et $\varepsilon_2$ correspondent respectivement aux fractions volumiques des phases liquides $L_1$ et $L_2$ du mélange diphasique.

Ainsi, on peut calculer $\varepsilon_1$ et $\varepsilon_2$ qui correspondent respectivement à:

$$\varepsilon_1 = \frac{v_1}{d} \cdot \frac{v_2 t - d}{v_2 - v_1} \quad \text{et}$$

$$\varepsilon_2 = \frac{v_2}{d} \cdot \frac{v_1 t - d}{v_1 - v_2} .$$

Pour la mesure directe des vitesses $v_1$ et $v_2$, on dispose dans la colonne au voisinage des parois de cette dernière, deux cellules cylindriques de mesure. Chaque cellule est apte à recevoir uniquement une seule des phases liquides présentes dans la colonne, ce qui peut être obtenu en choisissant de façon appropriée le matériau constituant chacune des cellules. Ainsi, pour obtenir une cellule capable de recevoir uniquement une phase aqueuse, on réalisera cette cellule en un matériau hydrophile facilement mouillé par les phases aqueuses, par exemple, en métal. En revanche, pour obtenir une cellule apte à recevoir une phase organique, on utilisera un matériau hydrophobe capable d'être mouillé par cette phase organique, par exemple, une matière plastique.

Sur l'une des parois de la cellule de mesure, on place une sonde à ultrasons, qui émet un signal ultrasonore puis détecte ce signal ultrasonore après réflexion sur l'autre paroi de la cellule. Ainsi, on détermine le temps mis par le signal ultrasonore pour parcourir deux fois la largeur de la cellule et on en déduit la vitesse de propagation $v_1$ ou $v_2$ de ce signal ultrasonore dans la phase liquide $L_1$ ou $L_2$ présente dans cette cellule de mesure.

Le procédé de l'invention présente notamment l'avantage de permettre d'assurer, au cours du fonctionnement de la colonne, une mesure du taux de rétention, en différents endroits de cette colonne, sans perturber son fonctionnement puisqu'il n'y a ni prélèvement, ni dispositif à l'intérieur de la colonne. En effet, les dispositifs d'émission et de réception de ces signaux ultrasonores n'ont pas besoin d'être au contact des liquides et peuvent être disposés dans des logements ménagés dans les parois de la colonne.

Selon un second mode de réalisation du procédé de l'invention, les points P et P' sont situés sur deux parois opposées du décanteur, de part et d'autre du niveau de l'interphase dans le décanteur en étant disposés de plus de façon telle qu'un signal ultrasonore émis au point P et parcourant le trajet P—P' se propage uniquement dans du liquide $L_2$ du liquide $L_1$, tous deux exempts de phase dispersée, et l'on calcule le niveau h de l'interphase par rapport au fond du décanteur en utilisant la formule suivante:

$$h = \frac{t - \dfrac{d}{v_2}}{\dfrac{1}{v_1} - \dfrac{1}{v_2}}$$

L'invention a également pour objet un dispositif pour la mise en oeuvre du procédé décrit ci-dessus.

Ce dispositif se caractérise en ce qu'il comprend des moyens pour émettre un signal ultrasonore en au moins l'un des points $P_1$, $P_2...P_n$ de ladite colonne, des moyens pour détecter ce signal ultrasonore en au moins l'un des points $P'_1$, $P'_2...P'_n$, lesdits points $P'_1$, $P'_2...P'_n$ étant situés respectivement à une distance $d_1$, $d_2...d_n$ des points $P_1$, $P_2...P_n$, des moyens pour déterminer au moins l'une des durées $t_1$, $t_2...t_n$ mises par lesdits signaux pour parcourir respectivement les distances $d_1$, $d_2...d_n$, des moyens pour mesurer directement dans la colonne la vitesse $v_1$ de propagation d'un signal ultrasonore dans le liquide $L_1$ et la vitesse $v_2$ de propagation d'un signal ultrasonore dans la liquide $L_2$, et des moyens pour calculer soit la fraction volumique $\varepsilon_1$ du liquide $L_1$ et/ou la fraction volumique $\varepsilon_2$ du liquide $L_2$, soit le niveau de l'interphase entre les liquides $L_1$ et $L_2$ dans le décanteur, à partir d'au moins l'une des durées $t_1$, $t_2...t_n$, de la ou des distances correspondantes $d_1$, $d_2...d_n$ et des vitesses $v_1$ et $v_2$.

Avantageusement, les moyens de mesure de la vitesse $v_1$ ou $v_2$ comprennent une cellule cylindrique de mesure disposée dans la colonne, ladite cellule de mesure étant apte à être parcourue uniquement par l'un desdits liquides $L_1$ ou $L_2$ circulant dans la colonne, et des moyens pour émettre un signal ultrasonore dans ladite cellule et pour détecter le signal ultrasonore réfléchi sur la paroi de ladite cellule.

Selon un premier mode de réalisation du dispositif de l'invention, spécialement adapté à la mesure du taux de rétention de la phase dispersée présente dans la colonne, le dispositif comprend des moyens pour élaborer un signal analogique, dit premier signal, représentatif de l'une des durées $t_1$, $t_2...t_n$, des moyens pour élaborer un signal analogique, dit deuxième signal, représentatif de la vitesse $v_1$ mesurée directement dans la colonne, des moyens pour élaborer un signal analogique, dit troisième signal, représentatif de la vitesse $v_2$ mesurée directement dans la colonne, et des moyens pour élaborer à partir dudit premier signal, dudit deuxième signal et dudit troisième signal, un quatrième signal analogique représentatif du taux de rétention de la phase dispersée présente dans la colonne.

Selon un second mode de réalisation du dispositif de l'invention, plus particulièrement adapté à la mesure du niveau de l'interphase dans le décanteur de la colonne, les points $P_n$ et $P'_n$ sont situés sur deux parois opposées du décanteur de la colonne de façon telle qu'ils soient disposés de part et d'autre du niveau de l'interphase dans le décanteur et qu'un signal ultrasonore émis au point $P_n$ et parcourant le trajet $P_n$—$P'_n$ se propage uniquement dans du liquide $L_2$ puis du liquide $L_1$ tous deux exempts de phase dispersée, et les moyens de mesure de

la vitesse $v_2$ au point $P_n$ et les moyens de mesure de la vitesse $v_1$ au point $P'_n$ comprennent des premiers moyens de réflexion pour réfléchir un signal ultrasonore émis au point $P_n$ et des seconds moyens de réflexion pour réfléchir un signal ultrasonore émis au point $P'_n$, des moyens pour déterminer la durée $t_{v_2}$ mise par le signal ultrasonore émis au point $P_n$ pour parcourir deux fois la distance entre le point $P_n$ et les premiers moyens de réflexion, des moyens pour déterminer la durée $t_{v_1}$ mise par le signal ultrasonore émis au point $P'_n$ pour parcourir deux fois la distance entre le point $P'_n$ et le seconds moyens de réflexion.

Ainsi, on peut déterminer directement dans le décanteur la vitesse $v_1$ de propagation d'un signal ultrasonore dans le liquide $L_1$ et la vitesse $v_2$ de propagation d'un signal ultrasonore dans le liquide $L_2$ présent dans le décanteur.

Dans ce second mode de réalisation, le dispositif comprend, de préférence, également des moyens pour élaborer un signal analogique, dit cinquième signal, représentatif de la durée $t_{v2}$, des moyens pour élaborer un signal analogique, dit sixième signal, représentatif de la durée $t_{v1}$, des moyens pour élaborer un signal analogique dit septième signal représentatif de la durée $t_n$, et des moyens pour élaborer à partir desdits cinquième, sixième et septième signaux un huitième signal analogique représentatif du niveau h de l'interphase dans ledit décanteur.

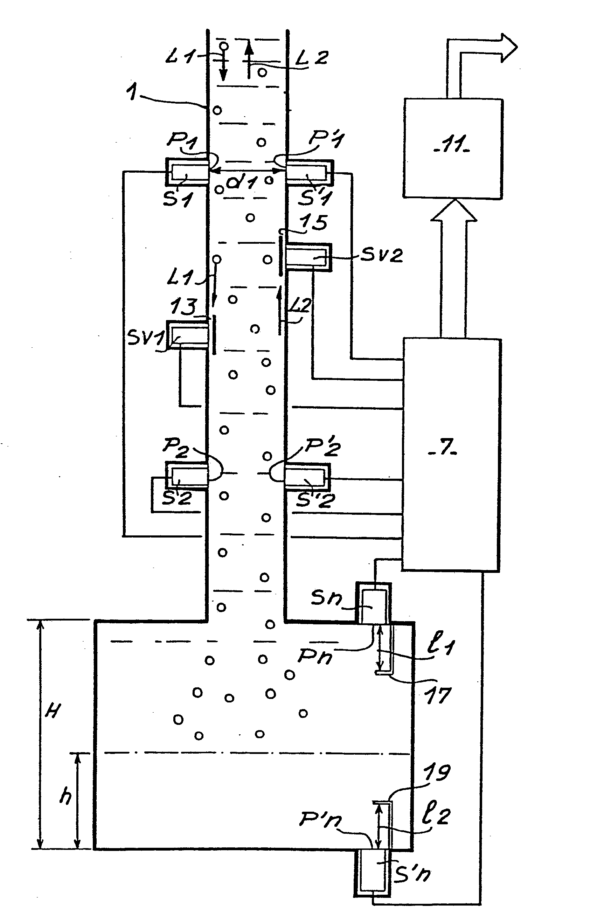

D'autres avantages et caractéristiques de l'invention apparaîtront mieux à la lecture de la description qui suit, donnée à titre illustratif et non limitatif en référence au dessin annexé qui représente de façon schématique un dispositif pour la mise en oeuvre du procédé de l'invention.

Sur la figure on voit une colonne 1, constituée par exemple, par une colonne pulsée de section circulaire, ayant une hauteur de 6 m et un diamètre de 100 mm, dans laquelle est maintenu à l'état de dispersion un mélange diphasique comprenant une phase liquide $L_1$ dispersée dans une phase liquide continue $L_2$.

Pour contrôler le taux de rétention de la phase dispersée présente dans cette colonne, on associe à cette dernière, au moins deux sondes à ultrasons $S_1$ et $S'_1$ qui comportent chacune une pastille émettrice et réceptrice d'ultrasons. Ces sondes sont disposées respectivement dans des logements ménagés dans la paroi de la colonne aux points $P_1$ et $P'_1$ qui sont diamétralement opposés, dans un même plan transversal.

Ainsi, la distance $d_1$ que parcourt le signal ultrasonore dans le mélange diphasique correspond au diamètre de la colonne, c'est-à-dire à 100 mm.

Bien que dans cet exemple, on ait illustré l'utilisation de deux sondes à ultrasons disposées de part et d'autre de la colonne, on précise que l'on pourrait utiliser une seule sonde à ultrasons associée à un réflecteur d'ultrasons disposé dans la colonne. Dans ce cas, la sonde jouera successivement la rôle d'émetteur d'un signal ultrasonore, puis de détecteur du signal ultrasonore réfléchi, la distance $d_1$ parcourue par le signal ultrasonore correspondant dans ce cas à deux fois la distance entre la sonde et le réflecteur.

Les pastilles des sondes $S_1$ et $S'_1$ sont des pastilles de céramique qui émettent un signal ultrasonore lorsqu'on leur applique une tension, et qui sont capables de détecter un signal ultrasonore et de le transformer en tension.

On note que les deux sondes $S_1$ et $S'_1$ sont reliées à une horloge électronique 7 qui est déclenchée au moment où la sonde émettrice $S_1$ engendre un signal ultrasonore et qui s'arrête au moment où la sonde $S'_1$ détecte le passage de ce signal ultrasonore.

Ainsi, l'horloge électronique 7 mesure le temps $t_1$ qui s'écoule entre l'émission et la réception du signal ultrasonore, c'est-à-dire le temps $t_1$ que met ce signal pour parcourir la distance $d_1$ en se propageant successivement dans la phase continue et la phase dispersée présentes dans la colonne, ce temps $t_1$ étant augmenté du temps mis par ce signal pour se propager également dans les parois disposées devant les pastilles des sondes $S_1$ et $S'_1$.

Les sondes $S_1$ et $S'_1$ qui sont disposées dans la partie centrale de la colonne sont plus spécialement destinées à la mesure du taux de rétention de la phase dispersée. Lorsqu'on veut suivre ce taux de rétention en différents endroits de la colonne, le dispositif comprend également d'autres paires de sondes du même type situées à des niveaux différents, telles que la paire de sondes $S_2$ et $S'_2$ agencées pour émettre un signal ultrasonore au point $P_2$ et pour détecter le signal ultrasonore au point $P'_2$, ces sondes $S_2$ et $S'_2$ étant également raccordées à l'horloge électronique 7.

Le dispositif comprend également deux cellules de mesure 13 et 15 disposées le long des parois de la colonne. La cellule de mesure 13 est réalisée en un matériau mouillable par la phase dispersée et de ce fait, on peut isoler dans cette cellule de mesure 13 la phase dispersée $L_1$ à l'état pur. La cellule de mesure 15 est réalisée en un matériau mouillable par la phase continue, et de la même façon on isole dans cette cellule de mesure 15 la phase continue $L_2$ à l'état pur. Des sondes ultrasonores $S_{v1}$ et $S_{v2}$ sont disposées au voisinage des cellules 13 et 15 et elles sont reliées également à l'horloge électronique 7. Ainsi, on peut déterminer le temps qui s'écoule entre l'émission par la sonde $S_{v1}$ d'un signal ultrasonore dans la cellule 13 et sa détection par la sonde $S_{v1}$ après réflexion sur la paroi de la cellule 13, et le temps qui s'écoule entre l'émission d'un signal ultrasonore par la sonde $S_{v2}$ dans la cellule 15 et la détection de ce signal ultrasonore par cette même sonde $S_{v2}$ après réflexion sur la paroi de la cellule 15.

Ces données qui sont représentatives des vitesses $v_1$ et $v_2$ de propagation d'un signal ultrasonore dans les liquides $L_1$ et $L_2$ sont introduites également dans un dispositif de calcul 11. De même, les signaux émis par l'horloge électronique (7) sont introduits dans le dispositif de calcul (11) qui permet de calculer à partir de ces différentes données la valeur de la fraction volumique $\varepsilon_1$ de la phase liquide $L_1$ ou la valeur de la fraction volumique $\varepsilon_2$ de la phase liquide $L_2$.

Le dispositif de calcul (11) est constitué par exemple, par des modules analogiques ou par un calculateur dans lequel on a introduit au préalable certaines données.

Sur la figure, on a représenté également la partie inférieure de la colonne qui joue dans ce cas le rôle de décanteur, puisque comme représenté sur le dessin la phase continue $L_2$ est la phase légère. Ce décanteur est constitué par une partie cylindrique de diamètre plus grand que le diamètre de la colonne et de hauteur totale H, et il est muni également de sondes ultrasonores $S_n$ et $S'_n$ disposées sur deux parois opposées du décanteur et capable d'émettre et de détecter un signal ultrasonore aux points $P_n$ et $P'_n$. Comme on peut le voir sur la figure, les points $P_n$ et $P'_n$ sont situés dans une zone du décanteur où le liquide $L_2$ ne contient pas de phase dispersée. Ainsi, un signal ultrasonore émis au point $P_n$ ne rencontrera successivement que du liquide $L_2$ pur puis le liquide $L_1$ décanté. Les sondes $S_n$ et $S'_n$ sont associées à des moyens de réflexion constitués par un écran métallique 17 ou 19 conçu pour assurer la réflexion des signaux ultrasonores émis respectivement par les sondes $S_n$ et $S'_n$.

Ces sondes $S_n$ et $S'_n$ sont également reliées à l'horloge électronique 7.

Lors du fonctionnement de la colonne, on fait circuler à contre-courant dans cette dernière deux liquides immiscibles dont l'un constitue la phase dispersée $L_1$ et l'autre la phase continue $L_2$. Périodiquement, on engendre un signal ultrasonore au point $P_1$ en appliquant une tension appropriée à la pastille de la sonde $S_1$, ce qui déclenche l'horloge électronique 7. Lorsque la pastille de la sonde $S'_1$ détecte le passage de ce signal ultrasonore, l'horloge électronique 7 s'interrompt et on mesure ainsi le temps $t_1$ mis par le signal ultrasonore pour parcourir la distance $d_1$. L'horloge électronique émet alors un signal analogique, dit premier signal, représentatif du temps $t_1$ et ce premier signal est envoyé dans le calculateur 11.

De même, les données fournies par les deux cellules de mesure telles que les cellules 13 et 15, qui mesurent directement dans la colonne la valeur des vitesses $v_1$ et $v_2$ sont introduites dans le calculateur 11 à partir de l'horloge électronique 7 qui élabore un signal analogique, dit deuxième signal représentatif de la vitesse $v_1$, c'est-à-dire de la durée $t_{v1}$ mise par le signal ultrasonore émis par la sonde $s_{v1}$ pour se propager dans la cellule 13 sur une distance équivalente à deux fois la largeur de cette cellule. De même, l'horloge 7 élabore un signal analogique dit troisième signal représentatif de la vitesse $v_2$ de propagation d'un signal ultrasonore dans la phase liquide $L_2$.

Le calculateur 11 émet alors à partir des premier, deuxième et troisième signaux, un quatrième signal analogique représentatif du taux de rétention $\varepsilon$ de la phase dispersée présente dans la colonne d'extraction liquide-liquide.

A titre d'exemple, on a testé ce dispositif pour la mesure du taux de rétention de la phase dispersée, dans le cas d'une extraction liquide-liquide réalisée entre une solution aqueuse d'acide nitrique 0,1 M et une solution de phosphate de tributyle à 30% dans du dodécane, la solution aqueuse d'acide nitrique constituant la phase continue $L_2$ et le phosphate de tributyle la phase dispersée $L_1$. Dans cet exemple, le mélange diphasique a été maintenu à l'état de dispersion par un dispositif de pulsations dont l'amplitude et la fréquence étaient réglées de façon à couvrir la zone utile des taux de rétention allant de 0 à 40%, et les mesures ont été effectuées avec un signal ultrasonore d'une fréquence voisine de 1 Mhertz.

Dans le cas de ces essais, les sondes émettrice et réceptrice d'ondes ultrasonores $S_1$ et $S'_1$ étaient disposées à mi-hauteur de la colonne, dans des logements de réception ménagés dans les parois de la colonne, de sorte que la distance $d$ entre les pastilles des deux sondes était de 116 mm.

Tout d'abord, pour étalonner le dispositif de calcul 11, on a effectué des mesures de vitesse de propagation d'un signal ultrasonore de fréquence voisine de 1 mégahertz en remplissant la colonne de phase $L_1$ pure ou de phase $L_2$ pure afin de déterminer les variations des vitesses $v_1$ et $v_2$ en fonction de la température et d'introduire ces données dans le dispositif de calcul 11.

Dans le cas de la phase dispersée $L_1$ (phosphate de tributyle), on a obtenu les résultats suivants:

TABLEAU 1

| T (°C) | $t_1$ ($\mu$s) | $v_1$ (m.s$^{-1}$) |
|---|---|---|
| 19,4 | 91,4 | 1269,1 |
| 27,4 | 94,8 | 1223,6 |

et dans le cas de la phase continue $L_2$ (acide nitrique), on a obtenu les résultats suivants:

TABLEAU 2

| T (°C) | $t_1$ ($\mu$s) | $v_2$ (m.s$^{-1}$) |
|---|---|---|
| 18,6 | 78,2 | 1483,3 |
| 26,8 | 77,2 | 1502,5 |

On précise que pour le calcul des vitesses $v_1$ et $v_2$ et des fractions volumiques $\varepsilon_1$ et $\varepsilon_2$ on tient compte du fait que le temps $t_1$ mesuré par l'horloge comprend non seulement le temps de propagation t du signal ultrasonore dans le mélange diphasique, mais aussi le temps de propagation de ce signal dans les parois disposées devant les pastilles des sondes $S_1$ et $S'_1$. En prenant l'hypothèse d'une épaisseur de paroi importante, il serait possible d'introduire le temps de propagation du signal à travers la paroi dans l'organe de traitement, ce qui permettrait de le retrancher du temps mesuré. Pour l'expérience décrite, la pastille de céramique était placée derrière une paroi d'acier inoxydable de 0,1 mm et il n'a pas été nécessaire de tenir compte de la paroi pour déterminer le temps de propagation.

Ainsi, on voit que pour la phase dispersée $L_1$, la pente de la droite $t_1=f(T)$ est de 0,425 $\mu s/°C$

et que pour la phase continue $L_2$ la pente de la droite $t_1=f(T)$ est de 0,122 $\mu s/°C$.

Dans le tableau 3, on a regroupé les résultats obtenus en déterminant ainsi le taux de rétention de la phase dispersée à diverses températures. A titre comparatif, on a indiqué également dans ce tableau les résultats obtenus lorsqu'on mesure dans les mêmes conditions le taux de rétention par la méthode de prélèvement qui consiste à prélever un échantillon et à le soumettre ensuite à une décantation et à déterminer les volumes respectifs de phase dispersée et de phase continue.

Au vu des résultats donnés dans le tableau 3 ci-après on voit que le procédé de l'invention permet d'obtenir des résultats tout à fait équivalents à ceux obtenus par la méthode de prélèvement, ce qui met en évidence la fiabilité du procédé de l'invention.

## TABLEAU 3

| T (°C) | $t_1$ ($\mu s$) | Taux de rétention (%) mesuré par: | |
|---|---|---|---|
| | | procédé de l'invention | méthode de prélèvement |
| 17,6 | 79,3 | 7,9 | 9 |
| 17,9 | 79,7 | 11,3 | 11,5 |
| 18,3 | 81,1 | 22,6 | 22 |
| 18,3 | 79,2 | 11,5 | 10,5 |
| 18,4 | 80,2 | 15,5 | 14 |
| 24,8 | 78,8 | 8,3 | 10 |
| 18,3 | 79,8 | 12,8 | 13,2 |
| 18,1 | 83,4 | 40,8 | 38 |
| 18,1 | 79,7 | 11,4 | 12,7 |
| 18,1 | 79 | 5,9 | 5,5 |

De même, le procédé et le dispositif de l'invention permettent d'obtenir des résultats très satisfaisants en ce qui concerne la mesure du niveau de l'interphase dans le décanteur.

Pour réaliser cette mesure, on effectue successivement les opérations suivantes. Tout d'abord, on mesure directement dans le décanteur la vitesse de propagation $v_2$ d'un signal ultrasonore dans la phase continue $L_2$ présente dans le décanteur et la vitesse de propagation $v_1$ d'un signal ultrasonore dans le liquide $L_1$ décanté. Dans ce but, on engendre un signal ultrasonore au point $P_n$ en utilisant la sonde $S_n$ et on déclenche l'horloge électronique 7 au moment de l'émission de ce signal, puis on

utilise la sonde $S_n$ pour détecter le signal qui s'est réfléchi sur la paroi métallique 17, ce qui interrompt l'horloge électronique 7. Ainsi, on mesure le temps $t_{v2}$ mis par le signal ultrasonore pour parcourir deux fois la distance $l_1$ entre la sonde $S_n$ et la paroi métallique 17. L'horloge électronique 7 émet alors un signal analogique, dit cinquième signal représentatif de la durée $t_{v2}$ et ce cinquième signal est envoyé dans le calculateur 11. De même, on détermine la vitesse $v_1$ de propagation d'un signal ultrasonore dans le liquide décanté $L_1$ en utilisant successivement la sonde $S'_n$ comme sonde émettrice puis détectrice du signal ultrasonore réfléchi sur la paroi 19. L'horloge électronique mesure ainsi le temps $t_{v1}$ mis par le signal ultrasonore pour parcourir deux fois la distance $l_2$ entre la sonde $S'_n$ et le réflecteur 19 et elle émet également un signal analogique dit sixième signal représentatif de la durée $t_{v1}$ et ce signal est envoyé dans le calculateur 11.

Après ces deux mesures préalables, on engendre un signal ultrasonore au point $P_n$ en utilisant la sonde $S_n$ comme sonde émettrice et on détecte le signal ultrasonore au point $P'_n$ en utilisant la sonde $S'_n$ comme sonde détectrice, l'horloge électronique ayant été déclenchée lors de l'émission de ce signal et interrompue lors de la détection de ce signal au point $P'_n$, ce qui permet de mesurer le temps $t_n$ mis par le signal ultrasonore pour parcourir la distance entre les points $P_n$ et $P'_n$ qui correspond à la hauteur du décanteur soit H. L'horloge électronique 7 émet alors un signal analogique dit septième signal représentatif de la durée $t_n$, et ce signal est envoyé dans le calculateur 11.

Le calculateur 11 détermine à partir de ces trois mesures successives le niveau h de l'interphase à partir de la formule suivante:

$$h = \frac{t_n - \dfrac{H}{v_2}}{\dfrac{1}{v_1} - \dfrac{1}{v_2}}$$

et il engendre un huitième signal analogique représentatif du niveau h de l'interphase dans le décanteur.

Dans cette formule, $v_2$ est égal à $2l_1/t_{v2}$ et $v_1$ est égal à $2l_2/t_{v1}$.

On précise que le niveau h est défini par rapport au fond du décanteur.

A titre d'exemples, on donne, ci-après, les résultats obtenus en ce qui concerne la mesure du niveau de l'interphase effectuée dans le décanteur d'une colonne pulsée garnie de plateaux perforés dans laquelle on a mis en contact à contre courant une phase organique constituée par du phosphate de tributyle à 30% dans du dodécane et une phase aqueuse constituée par de l'acide nitrique 3N, la phase organique constituant la phase continue.

Les caractéristiques du dispositif étaient les suivantes:

— Colonne
hauteur: 6 m,
diamètre: 50 mm.

— Décanteur
diamètre: 145 mm,
hauteur H: 250,1 mm
matière de construction: verre.

— Positionnement des sondes $S_n$ et $S'_n$
H: 250,1 mm,
distance entre la sonde $S_n$ et le réflecteur 17,
$l_1$: 15,1 mm
distance entre la sonde $S'_n$ et le réflecteur 19, $l_2$: 13 mm.

— Système d'organisation des mesures et de traitement
Microprocesseur INTEL 80/30 (calculateur 11).

Dans cet exemple, on a volontairement mesuré l'interphase à différents niveaux. Le tableau 4 qui suit donne la précision du calcul par rapport à la valeur mesurée directement à l'aide d'un triple décimètre.

TABLEAU 4

| Niveau h: mesuré directement (mm) | Niveau h: calculé suivant l'invention (mm) | Ecart par rapport à la mesure directe (%) |
|---|---|---|
| 50 | 52 | 4 |
| 75 | 74 | 1,33 |
| 100 | 99 | 1 |
| 125 | 123 | 1,6 |
| 150 | 149 | 0,7 |
| 175 | 175 | 0 |
| 200 | 202 | 1 |

## Revendications

1. Procédé de contrôle du fonctionnement d'une colonne d'extraction liquide-liquide comportant un décanteur, colonne dans laquelle circulent à contrecourant des liquides immiscibles constitués respectivement par un liquide $L_1$ et un liquide $L_2$, le liquide $L_2$ ayant une densité plus faible que celle du liquide $L_1$, caractérisé en ce qu'il consiste à déterminer le temps $t$ mis par un signal ultrasonore pour se propager dans la colonne d'un point P à un point P' situé à une distance $d$ du point P, à déterminer directement dans la colonne la vitesse $v_1$ de propagation de ce signal ultrasonore dans le liquide $L_1$ et la vitesse $v_2$ de propagation de ce signal ultrasonore dans le liquide $L_2$, et à calculer à partir de ce temps $t$, de la distance $d$ et des vitesses $v_1$ et $v_2$ ainsi déterminées, soit la fraction volumique de l'un ou des deux liquides $L_1$ et $L_2$, soit le niveau de l'interphase entre les liquides $L_1$ et $L_2$ présents dans ledit décanteur.

2. Procédé selon la revendication 1, caractérisé en ce que les points P et P' sont situés dans la partie centrale de la colonne et en ce que l'on calcule la fraction volumique $\varepsilon_1$ du liquide $L_1$ et/ou la fraction volumique $\varepsilon_2$ du liquide $L_2$ à partir des formules:

$$\varepsilon_1 = \frac{v_1}{d} \cdot \frac{v_2 t - d}{v_2 - v_1} \quad \text{et}$$

$$\varepsilon_2 = \frac{v_2}{d} \cdot \frac{v_1 t - d}{v_1 - v_2} \quad .$$

3. Procédé selon la revendication 1, caractérisé en ce que les points P et P' sont situés sur deux parois opposées du décanteur, de part et d'autre du niveau de l'interphase dans le décanteur, en étant disposés de plus de façon telle qu'un signal ultrasonore émis au point P et parcourant le trajet P—P' se propage uniquement dans du liquide $L_2$ puis du liquide $L_1$ tous deux exempts de phase dispersée et en ce que l'on calcule le niveau $h$ de l'interphase par rapport au fond du décanteur en utilisant la formule suivante:

$$h = \frac{t - \dfrac{d}{v_2}}{\dfrac{1}{v_1} - \dfrac{1}{v_2}}$$

4. Dispositif pour la mise en oeuvre du procédé selon l'une quelconque des revendications 1 à 3, caractérisé en ce qu'il comprend des moyens $(S_1, S_2 \ldots S_n)$ pour émettre un signal ultrasonore en au moins l'un des points $P_1$, $P_2 \ldots P_n$ de ladite colonne, des moyens $(S'_1, S'_2 \ldots S'_n)$ pour détecter ce signal ultrasonore en au moins l'un des points $P'_1$, $P'_2 \ldots P'_n$ de ladite colonne, lesdits points P', $P'_1 \ldots P'_2 \ldots P'_n$ étant situés respectivement à une distance $d_1$, $d_2 \ldots d_n$ des points $P_1$, $P_2 \ldots P_n$, des moyens (7) pour déterminer au moins l'une des durées $t_1$, $t_2 \ldots t_n$ mises par lesdits signaux pour parcourir respectivement les distances $d_1$, $d_2 \ldots d_n$, des moyens (13, $S_{v1}$ et 15, $Sv_2$) pour mesurer directement dans la colonne la vitesse $v_1$ de propagation d'un signal ultrasonore dans le liquide $L_1$ et la vitesse $v_2$ de propagation d'un signal ultrasonore dans le liquide $L_2$ et des moyens (11) pour calculer, soit la fraction volumique $\varepsilon_1$ du liquide $L_1$ et/ou la fraction volumique $\varepsilon_2$ du liquide $L_2$, soit le niveau de l'interphase entre les liquides $L_1$ et $L_2$ dans le décanteur, à partir d'au moins l'une des durées $t_1$, $t_2, \ldots t_n$, de la ou des distances correspondantes $d_1$, $d_2 \ldots d_n$ et des vitesses $v_1$ et $v_2$.

5. Dispositif selon la revendication 4, caractérisé en ce que lesdits moyens de mesure de la vitesse $v_1$ ou $v_2$ comprennent une cellule cylindrique (13, 15) de mesure disposée dans la colonne, ladite cellule de mesure étant apte à être parcourue uniquement par l'un desdits liquides $L_1$ ou $L_2$ circulant dans la colonne, et des moyens $(Sv_1, Sv_2)$ pour émettre un signal ultrasonore dans ladite cellule et pour détecter le signal ultrasonore réfléchi sur la paroi de ladite cellule.

6. Dispositif selon l'une quelconque des revendications 4 et 5, caractérisé en ce qu'il comprend des moyens pour élaborer un signal analogique dit premier signal représentatif de l'une des durées $t_1$, $t_2, \ldots t_n$, des moyens pour élaborer un signal analogique dit deuxième signal représentatif de la vitesse $v_1$ mesurée directement dans la colonne, des moyens pour élaborer un signal analogique dit troisième signal, représentatif de la vitesse $v_2$ mesurée directement dans la colonne, et des moyens pour élaborer à partir dudit premier signal, dudit deuxième signal et dudit troisième signal, un quatrième signal analogique représentatif du taux de rétention de la phase dispersée présente dans la colonne.

7. Dispositif selon la revendication 4, caractérisé en ce que les points $P_n$ et $P'_n$ étant situés sur deux parois opposées du décanteur de la colonne de façon telle qu'ils soient disposés de part et d'autre du niveau de l'interphase dans le décanteur et qu'un signal ultrasonore émis au point $P_n$ et parcourant le trajet $P_n$—$P'_n$ se propage uniquement dans du liquide $L_2$ puis du liquide $L_1$ tous deux exempts de phase dispersée, les moyens de mesure de la vitesse $v_2$ au point $P_n$ et les moyens de mesure de la vitesse $v_1$ au point $P'_n$ comprennent des premiers moyens de réflexion (17) pour réfléchir un signal ultrasonore émis au point $P_n$ et des seconds moyens de réflexion (19) pour réfléchir un signal ultrasonore émis au point $P'_n$, des moyens (7) pour déterminer la durée $t_{v2}$ mise par le signal ultrasonore émis au point $P_n$ pour parcourir deux fois la distance entre le point $P_n$

et les premiers moyens de réflexion, des moyens (7) pour déterminer la durée $t_{v_1}$ mise par le signal ultrasonore émis au point $P'_n$ pour parcourir deux fois la distance entre le point $P'_n$ et les seconds moyens de réflexion.

8. Dispositif selon la revendication 7, caractérisé en ce qu'il comprend des moyens pour élaborer un signal analogique dit cinquième signal, représentatif de la durée $t_{v_2}$, des moyens pour élaborer un signal analogique dit sixième signal, représentatif de la durée $t_{v_1}$, des moyens pour élaborer un signal analogique, dit septième signal représentatif de la durée $t_n$ et des moyens pour élaborer à partir desdits cinquième, sixième et septième signaux, un huitième signal analogique représentatif du niveau $h$ de l'interphase dans le décanteur.

## Patentansprüche

1. Verfahren zur Prüfung des Betriebes einer einen Absitzbehälter umfassenden Flüssigkeit-Flüssigkeit-Extraktionskolonne, in der im Gegenstrom unvermischbare Flüssigkeiten fließen, die von einer Flüssigkeit $L_1$ und einer Flüssigkeit $L_2$ gebildet sind, wobei die Flüssigkeit $L_2$ eine kleinere Dichte als diejenige der Flüssigkeit $L_1$ aufweist, dadurch gekennzeichnet, daß die Zeit $t$ zur Fortpflanzung eines Ultraschallsignals in der Kolonne von einer Stelle $P$ zu einer Stelle $P'$ bestimmt wird, welche sich mit einem Abstand der Stelle $P$ befindet, daß unmittelbar in der Kolonne die Fortpflanzungsgeschwindigkeit $v_1$ dieses Ultraschallsignals in der Flüssigkeit $L_1$ und die Fortpflanzungsgeschwindigkeit $v_2$ dieses Ultraschallsignals in der Flüssigkeit $L_2$ bestimmt wird, und daß ausgehend von dieser Zeit $t$, von dem Abstand $d$ und den so bestimmten Geschwindigkeiten $v_1$ und $v_2$ sei es der Volumenanteil einer der zwei Flüssigkeiten $L_1$ und $L_2$, sei es die Höhe der Grenzschicht zwischen den sich in dem Absitzbehälter befindenden Flüssigkeiten $L_1$ und $L_2$ bestimmt wird.

2. Verfahren nach Anspruch 1, dadurch gekennzeichnet, daß sich die Stellen $P$ und $P'$ in dem mittleren Abschnitt der Kolonne befinden und daß der Volumenanteil $\varepsilon_1$ der Flüssigkeit $L_1$ und/oder der Volumenanteil $\varepsilon_2$ der Flüssigkeit $L_2$ bestimmt wird, ausgehend von den Formeln:

$$\varepsilon_1 = \frac{v_1}{d} \cdot \frac{v_2 t - d}{v_2 - v_1} \quad \text{und}$$

$$\varepsilon_2 = \frac{v_2}{d} \cdot \frac{v_1 t - d}{v_1 - v_2}$$

3. Verfahren nach Anspruch 1, dadurch gekennzeichnet, daß sich die zwei Stellen $P$ und $P'$ an zwei einander gegenüberliegenden Wänden des Absitzbehälters auf den beiden Seiten der Höhe der Grenzschicht in dem Absitzbehälter befinden und ferner derart angeordnet sein, daß sich ein von der Stelle $P$ ausgesandtes und die Strecke $P—P'$ durchlaufendes Ultraschallsignal nur in der Flüssigkeit $L_2$ und dann in der Flüssigkeit $L_1$ fortpflanzt, die beide keine disperse Phase aufweisen, und daß die Höhe $h$ der Grenzschicht in bezug auf den Boden des Absitzbehälters berechnet wird unter Verwendung der folgenden Formel:

$$h = \frac{t - \dfrac{d}{v_2}}{\dfrac{1}{v_1} - \dfrac{1}{v_2}}$$

4. Vorrichtung zur Durchführung des Verfahrens nach einem der Ansprüche 1 bis 3, dadurch gekennzeichnet, daß die Vorrichtung umfaßt Mittel ($S_1$, $S_2$...$S_n$) um ein Ultraschallsignal an wenigstens einer der Stellen $P_1$, $P_2$...$P_n$ der Kolonne auszusenden, Mittel ($S'_1$, $S'_2$...$S'_n$), um dieses Ultraschallsignal an wenigstens einer der Stellen $P'_1$, $P'_2$...$P'_n$ der Kolonne zu erfassen, wobei sich die Stellen $P'$, $P'_1$...$P'_2$...$P'_n$ jeweils in einem Abstand $d_1$, $d_2$...$d_n$ der Stellen $P_1$, $P_2$...$P_n$ befinden, Mittel (7), um wenigstens eine der Zeiten $t_1$, $t_2$...$t_n$ zu messen, die die Signale zum Durchlaufen der entsprechenden Abstände $d_1$, $d_2$...$d_n$ benötigen, Mittel (13, $Sv_1$ und 15, $Sv_2$), um unmittelbar in der Säule die Fortpflanzungsgeschwindigkeit $v_1$ eines Ultraschallsignals in der Flüssigkeit $L_1$ und die Fortpflanzungsgeschwindigkeit $v_2$ eines Ultraschallsignals in der Flüssigkeit $L_2$ zu messen, und Mittel (11), um sei es den Volumenanteil $\varepsilon_1$ der Flüssigkeit $L_1$ und/oder den Volumenanteil $\varepsilon_2$ der Flüssigkeit $L_2$, sei es die Höhe der Grenzschicht zwischen den Flüssigkeiten $L_1$ und $L_2$ in dem Absitzbehälter aufgrund von wenigstens einer der Zeiten $t_1$, $t_2$...$t_n$, des entsprechenden Abstandes oder der entsprechenden Abstände $d_1$, $d_2$...$d_n$ und der Geschwindigkeiten $v_1$ und $v_2$ zu berechnen.

5. Vorrichtung nach Anspruch 4, dadurch gekennzeichnet, daß die Mittel zum Messen der Geschwindigkeit $v_1$ oder $v_2$ eine in der Kolonne angeordnete, zylinderförmige Meßzelle (13, 15), die nur von einer der in der Kolonne fließenden Flüssigkeiten $L_1$ oder $L_2$ durchströmt wird, und Mittel ($Sv_1$, $Sv_2$) umfassen, um ein Ultraschallsignal in der Zelle auszusenden und das an der Wand der Zelle reflektierte Ultraschallsignal zu erfassen.

6. Vorrichtung nach Anspruch 4 oder 5, dadurch gekennzeichnet, daß die Vorrichtung umfaßt Mittel, um ein als erstes Signal bezeichnetes, analoges Signal zu erzeugen, welches eine der Zeiten $t_1$, $t_2$...$t_n$ darstellt, Mittel, um ein als zweites Signal bezeichnetes, analoges Signal zu erzeugen, welches die unmittelbar in der Kolonne gemessene Geschwindigkeit $v_1$ darstellt, Mittel um ein als drittes Signal bezeichnetes, analoges Signal zu erzeugen, welches die unmittelbar in der Kolonne gemessene Geschwindigkeit $v_2$ darstellt, und Mittel, um ausgehend von dem ersten Signal, dem zweiten Signal und dem dritten Signal ein viertes, analoges Signal zu erzeugen, welches das Rückhaltevermögen der in der Kolonne vorliegenden, dispersen Phase darstellt.

7. Vorrichtung nach Anspruch 4, dadurch gekennzeichnet, daß sich die Stellen $P_n$ und $P'_n$ an zwei einander gegenüberliegenden Wänden des Absitzbehälters der Kolonne derart befinden, daß sie auf beiden Seiten der Höhe der Grenzschicht in dem Absitzbehälter angeordnet sind und daß sich ein an der Stelle $P_n$ ausgesandtes Ultraschallsignal, welches die Strecke $P_n$—$P'_n$ durchläuft, einzig in der Flüssigkeit $L_2$ und dann in der Flüssigkeit $L_1$, die beide keine disperse Phase aufweisen, fortpflanzt, daß die Mittel zum Messen der Geschwindigkeit $v_2$ an der Stelle $P_n$ und die Mittel zum Messen der Geschwindigkeit $v_1$ an der Stelle $P'_n$ erste Reflexionsmittel (17) zum Reflektieren eines an der Stelle $P_n$ ausgesanten Ultraschallsignals und zweite Reflexionsmittel (19) zum Reflektieren eines an der Stelle $P'_n$ ausgesandten Ultraschallsignals umfassen, sowie Mittel (7), um die Zeitdauer $t_{v_2}$ zu bestimmen, die das an der Stelle $P_n$ ausgesandte Ultraschallsignal benötigt, um zweimal den Abstand zwischen dem Punkt $P_n$ und den ersten Reflexionsmitteln zurückzulegen, und Mittel (7), um die Zeitdauer $t_{v_1}$ zu bestimmen, die das an der Stelle $P'_n$ ausgesandte Ultraschallsignal benötigt, um zweimal den Abstand zwischen dem Punkt $P'_n$ und den zweiten Reflexionsmitteln zurückzulegen.

8. Vorrichtung nach Anspruch 7, dadurch gekennzeichnet, daß die Vorrichtung umfaßt Mittel, um ein als fünftes Signal bezeichnetes, analoges Signal zu erzeugen, welches die Zeitdauer $t_{v_2}$ darstellt, Mittel, um ein als sechstes Signal bezeichnetes, analoges Signal zu erzeugen, welches die Zeitdauer $t_{v_1}$ darstellt, Mittel, um ein als siebtes Signal bezeichnetes analoges Signal zu erzeugen, welches die Zeitdauer $t_n$ darstellt, sowie Mittel, um ausgehend von dem fünften, dem sechsten und dem siebten Signal ein achtes, analoges Signal zu erzeugen, welches die Höhe h der Grenzschicht in dem Absitzbehälter darstellt.

**Claims**

1. Process for monitoring the operation of a liquid-liquid extraction column comprising a decanter, and a column in which immiscible liquids $L_1$ and $L_2$ circulate in counter-current, the liquid $L_2$ having a density less than that of liquid $L_1$, characterized in that it comprises measuring the time $t$ taken for an ultrasonic signal to pass through the column from a point P to a point P' located at a distance $d$ from point P, measuring directly in the column the speed of propagation $V_1$ of the ultrasonic signal in the liquid $L_1$, and the speed of propagation $V_2$ of the ultrasonic signal in the liquid $L_2$, and in calculating from the thereby-determined time $t$, distance $d$ and speeds $V_1$ and $V_2$, either the volume fraction of one or both liquids $L_1$ and $L_2$, or the level of the interface between the liquids $L_1$ and $L_2$ in the said decanter.

2. Process according to Claim 1, characterized in that the points P and P' are located in the central portion of the column, and in that the volume fraction $\varepsilon_1$ of the liquid $L_1$, and/or the volume fraction $\varepsilon_2$ of the liquid $L_2$, are calculated from the formulae

$$\varepsilon_1 = \frac{V_1}{d} \cdot \frac{V_2 t - d}{V_2 - V_1}$$

and

$$\varepsilon_2 = \frac{V_2}{d} \cdot \frac{V_1 t - d}{V_1 - V_2}$$

3. Process according to Claim 1, characterized in that the points P and P' are located on two opposed walls of the decanter, on respective sides of the level of the interface in the decanter, being moreover so located that an ultrasonic signal emitted at point P and passing along the trajectory P—P', passes initially only through liquid $L_2$ and then through liquid $L_1$, both being free from any dispersed phase, and then the height $h$ of the interface above the bottom of the decanter is calculated from the formula

$$h = \frac{t - \dfrac{d}{v_2}}{\dfrac{1}{v_1} - \dfrac{1}{v_2}}$$

4. Apparatus for carrying out a process according to any one of Claims 1 to 3, characterized in that it comprises means ($S_1$, $S_2$...$S_n$) for emitting an ultrasonic signal from at least one of the points $P_1$, $P_2$...$P_n$ in said column, means ($S'_1$, $S'_2$...$S'_n$) for detecting said ultrasonic signal at least one of the points $P'_1$, $P'_2$...$P'_n$ in said column, said points $P'$, $P'_1$...$P'_2$...$P'_n$ being respectively located at distances $d_1$, $d_2$...$d_n$ from the point $P_1$, $P_2$...$P_n$, means (7) for measuring at least one of the times $t_1$, $t_2$...$t_n$ taken for said signals to traverse the respective distances $d_1$, $d_2$...$d_n$, means (13, $Sv_1$ and 15, $Sv_2$) for directly measuring in the column the speed of propagation $V_1$ of an ultrasonic signal in the liquid $L_1$, and the speed of propagation $V_2$ of an ultrasonic signal in the liquid $L_2$, and means (11) for either calculating the volume fraction $\varepsilon_1$ of the liquid $L_1$ and/or the volume fraction $\varepsilon_2$ of the

liquid $L_2$, or calculating the level of the interface between the liquids $L_1$ and $L_2$ in the decanter, from at least one of the times $t_1$, $t_2...t_n$, from the corresponding distance or distances $d_1$, $d_2...d_n$, and from the speeds $V_1$ and $V_2$.

5. Apparatus according to Claim 4, characterized in that said means for measuring the speed $V_1$ or $V_2$ comprise a cylindrical measuring cell (13, 15) located in the column, said measuring cell being adapted to be traversed by one of the said liquids $L_1$ or $L_2$ circulating in the column, and means ($Sv_1$, $Sv_2$) for emitting an ultrasonic signal into said cell and for detecting the ultrasonic signal reflected by the wall of the said cell.

6. Apparatus according to either of Claims 4 and 5, characterized in that it comprises means for deriving a first analog signal representative of one of the times $t_1$, $t_2...t_n$, means for deriving a second analog signal representative of the speed $V_1$ directly measured in the column, means for deriving a third analog signal representative of the speed $V_2$ directly measured in the column, and means for deriving, from said first, second and third signals, a fourth analog signal representative of the suspended fraction of the dispersed phase present in the column.

7. Apparatus according to Claim 4, characterized in that the points $P_n$ and $P'_n$ are located on two opposed walls of the decanter associated with the column in such a manner that they are located on respective sides of the level of the interface in the decanter, and in that an ultrasonic signal emitted at point $P_n$ and following the trajectory $P_n$—$P'_n$ passes initially only through liquid $L_2$ and then through liquid $L_1$ both being free from any dispersed phase, the means for measuring speed $V_2$ at point $P_n$ and the means for measuring speed $V_1$ at point $P'_n$ comprising first reflection means (17) for reflecting an ultrasonic signal emitted at point $P_n$, and second reflection means (19) for reflecting an ultrasonic signal emitted at point $P'_n$, with means (7) for measuring the time $t_{v_2}$ taken for the ultrasonic signal emitted at point $P_n$ to travel twice the distance between the point $P_n$ and the first reflection means, and means (7) for measuring the time $t_{v_1}$ taken for the ultrasonic signal emitted at point $P'_n$ to travel twice the distance between the point $P'_n$ and the second reflection means.

8. Apparatus according to Claim 7, characterized in that it comprises means for deriving a fifth analog signal representative of the time $t_{v_2}$, means for deriving a sixth analog signal representative of the time $t_{v_1}$, means for deriving a seventh analog signal representative of the time $t_n$, and means for deriving from said fifth, sixth and seventh signals, an eigth analog signal representative of the level $h$ of the interface in the decanter.